(19) Europäisches Patentamt
European Patent Office
Office européen des brevets

(11) **EP 4 672 136 A1**

(12) **EUROPEAN PATENT APPLICATION**

(43) Date of publication:
**31.12.2025 Bulletin 2026/01**

(21) Application number: **24184863.9**

(22) Date of filing: **27.06.2024**

(51) International Patent Classification (IPC):
**G06T 5/60** *(2024.01)* **G06T 11/00** *(2006.01)*

(52) Cooperative Patent Classification (CPC):
**G06T 11/60; G06N 3/045; G06N 3/047;**
G06N 3/0455; G06V 10/25; G06V 10/82

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
- **GALLUCCI, Alessio**
  **Eindhoven (NL)**

- **PEZZOTTI, Nicola**
  **Eindhoven (NL)**
- **ZNAMENSKIY, Dmitry Nikolaevich**
  **Eindhoven (NL)**
- **FLINSENBERG, Ingrid Christina Maria**
  **Eindhoven (NL)**
- **ZEITOUNY, Mounir**
  **Eindhoven (NL)**

(74) Representative: **Philips Intellectual Property & Standards**
**High Tech Campus 52**
**5656 AG Eindhoven (NL)**

(54) **SKIN IMAGING**

(57) Proposed concepts thus aim to provide methods, and systems pertaining to processing image data of skin. In particular, embodiments aim to provide a method for altering a target region of the image data that depicts a skin feature of a subject.

IDENTIFY TARGET REGION OF IMAGE DATA — 110

PROCESS IMAGE DATA WITH AUTOENCODER MODEL TO GENERATE PLURALITY OF CODE VALUES — 120

IDENTIFY FIRST AND SECOND SUBSETS OF THE PLURALITY OF CODE VLAUES — 130

DETERMINE DISTRIBUTION FO THE SECOND SUBSET OF THE PLURALITY OF CODE VALUES — 140

ADJUST THE VALUES OF THE FRIST SUBSET OF THE PLURALITY OF CODE VALUES — 150

ALTER TARGET REGION OF IMAGE DATA BASED ON THE PLURALITY OF ALTERED CODE VALUES — 160

100

**FIG. 1**

EP 4 672 136 A1

**Description**

FIELD OF THE INVENTION

This invention relates to the field of image processing, and in particular to processing images of skin.

BACKGROUND OF THE INVENTION

Images of skin are often used during the research and development of personal care devices. For example, skin images may be collected in order to estimate the number of flashes required for effective photo-epilation or to count numbers of skin hairs to evaluate the effectiveness of different shaving devices. Other examples may include medical and scientific research applications.

Often the images used in these studies contain privacy-sensitive or harmful information that jeopardises user privacy and security. This may include images of identifying skin features such as tattoos, birthmarks, skin lesions, or collections of skin features like constellations of nevi or pores of skin hair. Images containing such features may allow for the identity of the individual to be determined from the images alone and therefore the presence of such features in images may raise user privacy and safety concerns.

SUMMARY OF THE INVENTION

The invention is defined by the claims.

According to an aspect of the invention, there is provided a computer-implemented method for processing image data of skin of a subject.

The method comprises: identifying a target region of the image data that depicts a skin feature of the subject; processing the image data with an autoencoder model to generate a plurality of code values representing the image data in a latent space; identifying a first subset of the plurality of code values that correspond to the target region of the image data and a second subset of the plurality of code values that do not correspond to the target region of the image data; determining a distribution of the second subset of the plurality of code values; adjusting the values of the first subset of the plurality of code values, based on the determined distribution of the second subset of the plurality of code values. To generate a plurality of altered code values; and altering the target region of the image data based on the plurality of altered code values.

Proposed concepts thus aim to provide schemes, solutions, concepts, designs, methods, and systems pertaining to processing image data of skin. In particular, embodiments aim to provide a method for altering a target region of the image data that depicts a skin feature of a subject.

The proposed invention is implemented using an autoencoder model which transforms image data of skin to a latent space. The code values generated by the autoencoder model that are associated with a skin feature in the image data are adjusted to generate altered image data. In the altered image data, the skin feature may be masked or obscured such that the privacy of the individual is protected.

Images of skin used for the assessment and development of personal care devices may contain skin features that identify the individual depicted in the image. The use of such images may therefore raise privacy concerns. The proposed invention results in the detection of identifying skin features in image data and the alteration of the image data associated with these features so as to preserve the privacy of the individual.

A key advantage of the proposed invention is that the adjustment to the code values associated with the skin feature is based on the generated code values for the portions of the image data that don't depict the skin feature. Therefore, the resulting altered image data provides a realistic "patch" over the identified skin feature such that the altered image data is still useful for research and development applications. For instance, embodiments may effectively replace an unwanted lesion with "healthy" surrounding skin. In this way, the altered image date (e.g. the replacement skin) may be personalized and targeted to the subject.

Ultimately, an improved method for processing image data of skin of a subject in which the privacy of the subject is preserved is provided by the proposed concept(s).

In some embodiments, adjusting the values of the first subset of the plurality of code values may comprise: determining a distribution of the first subset of the plurality of code values; determining, based on the distribution of the first subset of the plurality of code values and the distribution of the second subset of the plurality of code values a set of weights describing the relative occurrences of code values in the first and second subsets of the plurality of code values; determining a distribution of the plurality of code values as a whole; adjusting the determined distribution of the plurality of code values, based on the determined set of weights, to determine a weighted distribution of code values; and adjusting the values of the first subset of the plurality of code values based on the weighted distribution. This method may be advantageous in that it results in altered image data in the target region that has similar properties to regions of the image data that don't depict the skin feature.

In some embodiments, determining the set of weights may comprise calculating a ratio of the occurrence of a predetermined value in the first subset of the plurality of code values to the occurrence of the predetermined value in the second subset of the plurality of code values. This may help in determining which values in the plurality of code values relate to properties of skin features and which relate to properties of background skin. Therefore, this proposed method may result in a more realistic alteration of the target region of the image data.

In some embodiments, the skin feature of the subject may be at least one of: a birthmark; a tattoo; a skin lesion; and a collection of skin features. Each of these features may indicate the identity of the subject and therefore altering the image data to alter the depiction of these features in the image data may help to preserve the privacy of the subject.

In some embodiments, identifying the target region of the image data may comprise processing the image data with a feature detection model (e.g. a conventional object segmentation model or, more specifically, a known existing skin lesion segmentation model). This may allow for accurate and automatic detection of skin features that leak the privacy of the subject, removing the need for potentially problematic skin features in the image data to be identified manually.

In some embodiments, the latent space may be associated with a set of quantized vectors each of the quantized vectors being associated with a corresponding index, and each of the plurality of code values may comprise an index value corresponding to one of the quantized vectors of the set of quantized vectors. Using such a latent space may be beneficial in that it reduces the amount of information required to be stored for the encoded form of the image data.

In some embodiments, the autoencoder model is a variation autoencoder model with a single layer, or a variation autoencoder model with at least two layers. This may result in a more reliable representation of the image data in latent space.

In some embodiments, identifying the first subset of the plurality of code values may comprise transforming the target region into latent space. This may prove an efficient way of identifying which code values of the plurality of code values encode the target region of the image data.

In some embodiments, the distribution of the second subset of code values may comprise a conditional distribution describing for each code value of the second subset of the plurality of code values, the probability the code value has a certain predetermined value given the value of at least one other code value of the second subset of the plurality of code values. Conditional probability distributions provide an efficient method for generating new code values that have similar properties to the second subset of the plurality of code values.

In some embodiments, adjusting the values of the first subset of the plurality of code values may comprise sampling the distribution of the second subset of the plurality of code values according to a multinomial distribution. Sampling in this way is an efficient way of generating altered code values that have a similar distribution to the distribution of the second subset of the plurality of code values. In some cases, the sampling may be autoregressive and may take into account the previous codes/skin patches. Furthermore, to avoid artifacts in the autoregressive approach, one may sample multiple times from multiple directions and then average the several sampled version.

In some embodiments, the image data may comprise a plurality of images, and the first subset of code values may correspond to a first image of the plurality of images and the second subset of code values may correspond to a second, different image of the plurality of images. During an image acquisition process some images of the subject skin obtained may contain identifying skin features and others may not. By using data from the images that do not contain skin features to alter a region of an image that does contain a skin feature, the privacy of the individual may be preserved whilst maintaining a realistic depiction of the subject's skin.

According to an aspect of the proposed invention, there is provided a computer program comprising computer program code means adapted, when said computer program is run on a computer, to implement any of the above-described methods.

According to another aspect of the proposed invention, there is provided a processing arrangement configured to: identify a target region of the image data that depicts a skin feature of the subject; process the image data with an autoencoder model to generate a plurality of code values representing the image data in a latent space; identify a first subset of the plurality of code values that correspond to the target region of the image data and a second subset of the plurality of code values that do not correspond to the target region of the image data; determine a distribution of the second subset of the plurality of code values; adjust the values of the first subset of the plurality of code values, based on the determined distribution on the second subset of the plurality of code values, to generate a plurality of altered code values; and alter the target region of the image data based on the plurality of altered code values.

According to yet another aspect of the present invention there is provided a system for processing image data of skin of a subject, the system comprising: an image sensor configured to obtain image data of the skin of the subject; and the processing arrangement described above.

Embodiments may be employed in combination with conventional/existing skin imaging methods and systems. In this way, embodiments may integrate into legacy systems to improve and/or extend their functionality and capabilities.

Thus, there may be proposed concepts for processing image data of the skin of a subject. These and other aspects of the invention will be apparent from an elicited with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 depicts a simplified flow diagram of a computer-implemented method for processing images of skin of a subject according to an embodiment of the proposed invention;

Fig. 2 is a simplified illustration of the processing steps of an autoencoder model;

Fig. 3 depicts a simplified flow diagram of a method for adjusting the values of a first subset of a plurality of code values according to an embodiment of the proposed invention;

Fig. 4 is a simplified block diagram of system for processing images of skin of a subject according to an embodiment of the proposed invention; and

Fig. 5 is a simplified block diagram of a computer within which one or more parts of an embodiment may be employed.

## DETAILED DESCRIPTION OF THE EMBODIMENTS

The invention will be described with reference to the Figures.

It should be understood that the detailed description and specific examples, while indicating exemplary embodiments of the apparatus, systems and methods, are intended for the purpose of illustration only and are not intended to limit the scope of the invention. These and other features, aspects, and advantages of the apparatus, systems, and methods of the present invention will become better understood from the following description, appended claims, and accompanying drawings. It should be understood that the Figures are merely schematic and are not drawn to scale. It should be understood that the same reference numerals are used throughout the Figures to indicate the same or similar parts.

Implementations in accordance with the present disclosure relate to various techniques, methods, schemes, and/or solutions pertaining to processing image data of skin of a subject. According to proposed concepts, several possible solutions may be implemented separately or jointly. That is, although these possible solutions may be described below separately, two or more of these possible solutions may be implemented in one combination or another.

Embodiments of the invention aim to provide concepts for altering image data of skin of a subject. The proposed methods and systems may be suitable for altering image data in order to preserve the privacy of a subject. This is achieved by identifying within image data certain skin features that may identify the subject and then altering the image data associated with the identified skin features.

Skin images may be collected for many personal care and health activities and studies. In some instances, collection of skin images of a subject may leak the privacy of the subject. The present invention may be used to overcome this problem by detecting and altering features within an image that may indicate the identity of the user. This alteration is carried out based on data contained within regions of the image data that don't show the identified skin features. In this way, the proposed invention may result in image of skin in which identifying skin features are removed to preserve the privacy of the subject whilst remaining realistic images of skin such that they can still be used in analysis and research. Although throughout the description the invention is described in relation to this specific application, it will be understood that the principles of the invention may be equally well applied to other image processing applications such as blemish removal or tattoo removal from images.

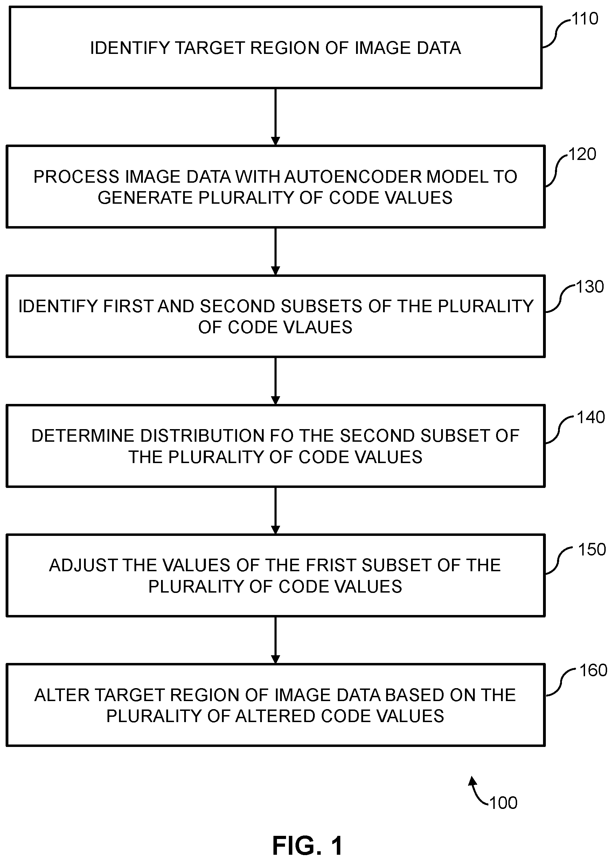

Referring now to Fig. 1, there is depicted a simplified flow diagram of a computer-implemented method 100 for processing skin data of a subject according to a proposed embodiment.

The method commences with a step 110 comprising identifying a target region of the image data that depicts a skin feature of the subject. In this exemplary embodiment, identifying the target region of the image data comprises processing the image data with a feature detection model (or image/lesion segmentation model) trained to identify and locate birthmarks in the image data.

Once the target region has been identified, the method proceeds to step 120 comprising processing the image data with an autoencoder model to generate a plurality of code values representing the image data in a latent space. The autoencoder model is trained to generate an encoding mapping to map the image data to the latent space, such that features of the image data with similar properties map to similar code values. In this way, the plurality of code values represents the image data.

Step 130 comprises identifying a first subset of the plurality of code values that correspond to the target region of the image data and a second subset of the plurality of code values that do not correspond to the target region of the image data. In this exemplary embodiment, identifying the first and second subset of the plurality of code values comprises transforming the target region into the latent space. The first subset of the plurality of code values are those code values of the plurality of code values corresponding to the transformed region in latent space, and the second subset of the plurality of code values are those code values of the plurality of code values not corresponding to the transformed region.

Step 140 of method 100 comprises determining a distribution of the second subset of the plurality of code values. In this exemplary embodiment, the distribution of the second subset of the plurality of code values comprises a conditional distribution describing, for each code value of the second subset of the plurality of code values, the probability the code value has a certain predetermined value given the value of at least one other code value of the second subset of the plurality of code values.

The distribution of the second subset of the plurality of code values in this example therefore describes the probability distribution of the value of a given code value in latent space, given the value of the neighbouring code values in latent space.

Once the distribution of the second subset of the plurality of code values has been determined, the method proceeds to step 150 comprising adjusting the values of the first subset of the plurality of code values, based on the determined distribution of the second subset of the plurality of code values to generate a plurality of altered code values. Since the plurality of altered code values are generated based on the determined distribution of the second subset of the plurality of code values, it is expected that the altered code values relate to similar image properties as the second subset of the plurality of code values.

Once the plurality of altered code values has been generated, the method proceeds to step 160 comprising altering the target region of the image data based on the plurality of altered code values. As well as learning an encoding mapping to transform the image data to latent space, the autoencoder model is also trained to learn a decoding mapping which can be used to reconstruct the image data from the representation of the image data in latent space (i.e., the plurality of code values). In this exemplary embodiment, step 160 involves using the learned decoding mapping of the autoencoder model to generate image data based on the altered code values.

The values of the first subset of the plurality of code values have been adjusted based on the distribution of the second subset of the plurality of code values, and the code values describe information about the properties of the image data. Hence, in the altered image data the skin feature may no longer be depicted and in its place a region of skin with similar properties to the skin depicted in surrounding portions of the image may be seen. As such the proposed invention may advantageously result in the masking of skin features in the image and their replacement with a realistic synthetic depiction of skin of the subject.

Although in the method 100, identifying a target region of the image data that depicts a skin feature of the subject comprises processing the image data with a feature detection model trained to identify birthmarks in skin images, this need not be the case in all embodiments of the proposed invention. The skin feature of the subject may be at least one of: a birthmark; a tattoo; a skin lesion; and a collection of skin features. In some embodiments, the detection of the skin feature may not be done automatically but may involve manual annotation of image data by a skilled professional. Identifying the target region of the image data in this instance may then involve processing metadata of the image data which comprises information about the annotated skin feature to identify a bounding box of the target region.

Similarly, other aspects of the method 100 may be implemented differently in alternative embodiments. Determining the distribution of the second subset of the plurality of code values need not comprise determining a conditional distribution. Instead, a simple probability distribution describing the relative occurrence of different values in latent space present in the second subset of the plurality of code values may be determined. Sampling the latent space according to this distribution can then be used to generate the altered code values. In another example, the conditional distribution may not describe conditional probabilities for each code value of the second subset of the plurality of code values but may instead comprises the same average conditional distribution for each code value of the second subset of the plurality of code values. This average conditional distribution may for example be a bilinear interpolation between conditional distributions associated with the boundary of the target region.

In some embodiments, the image data may comprise a plurality of images of the skin of the subject. Some skin surveys may involve the acquisition of multiple images each depicting different regions of the subject's skin. In this case, the first subset of the plurality of code values may correspond to image data of a first image of the plurality of images and the second subset of the plurality of code values may correspond to image data of a second image of the plurality of images. In some instances, the target region depicting a skin feature in an image may take up a large proportion of the image. Therefore, in some cases it may be beneficial to use data from other images of other regions of the body to alter the target region. In other embodiments, the target region may span multiple images of the plurality of image of the image data and/or the second subset of the plurality of images may represent multiple different images of the plurality of images.

In further embodiments, identifying the first subset of the plurality of code values may not involve transforming the target region to latent space but may instead comprise simply resizing the target region according to the relative dimensions of the latent space compared to the image space.

The invention involves the use of an autoencoder model. These are a type of artificial neural network used compress and reconstruct input data. The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformations (e.g. the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

There are several types of neural network, such as convolutional neural networks (CNNs) and recurrent neural networks (RNNs). CNNs typically contain several layers, including a convolutional layer, a pooling layer, and a fully connected layer. The convolutional layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries.

For example, weightings of the mathematical operation of each neuron may be modified until the error converges. Known methods of modifying a neural network include gradient descent, backpropagation algorithms and so on.

Autoencoder models comprise two modules: an encoder and a decoder. The encoder takes input data and compresses it to a lower dimensional representation in latent space. The decoder is trained to reconstruct the input data from the lower dimensional representation. Thus, the autoencoder model learns two mappings, the first to describe a transformation from image space to latent space and the second to describe the transformation from the latent space to image space. The compressed representation of the image data, and the encoding and decoding mapping may be useful for establishing properties of the image data.

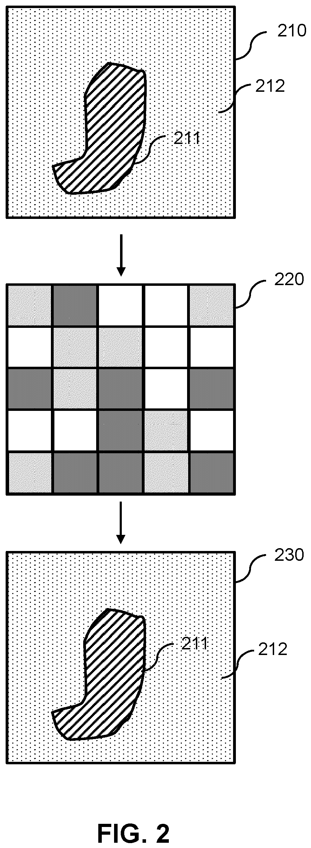

Referring now to Fig. 2 there is depicted a simplified illustration of the processing steps of an autoencoder model. Input image data 210 is transformed by the encoder of the autoencoder model to a representation 220 of the image data in a latent space. The decoder of the autoencoder is trained to learn a decoding mapping for transforming the representation 220 into reconstructed image data 230. The image data 210 depicts a skin feature 211 and surrounding skin 212. The reconstructed image data 230 reliably reconstructs the image feature 211 and the surrounding skin 212 (as a different image).

The representation 220 describes the image data 210 in a latent space that has fewer dimensions than the image space and hence the representation 220 is a compression of the image data 210. The representation 220 comprises a plurality of code values that are represented in Fig. 2 by greyscale pixel values. The latent space may be a continuous space or a discrete space and as such the values of the plurality of code values may be one of a continuous or discrete set of values. The values of the plurality of code values encode information about the properties of the image data 210.

Since the image data 210 is compressed in the representation 220 of the image data in latent space the mapping from the pixels of the image data 210 to the representation 220 is not one-to-one. Therefore, in the proposed invention, the first and second subsets of the plurality of code values may overlap as some of the plurality of code values may encode both the skin feature 211 and the surrounding skin 212 (even though they are localized and spatial).

In some embodiments of the present invention, a variation autoencoder model with two or more layers may be used. This may result in the generation of a plurality of representations of the image instead of a single representation 220 of the image. This may improve the reliability of the method in producing an altered image that depicts realistic skin in the target region.

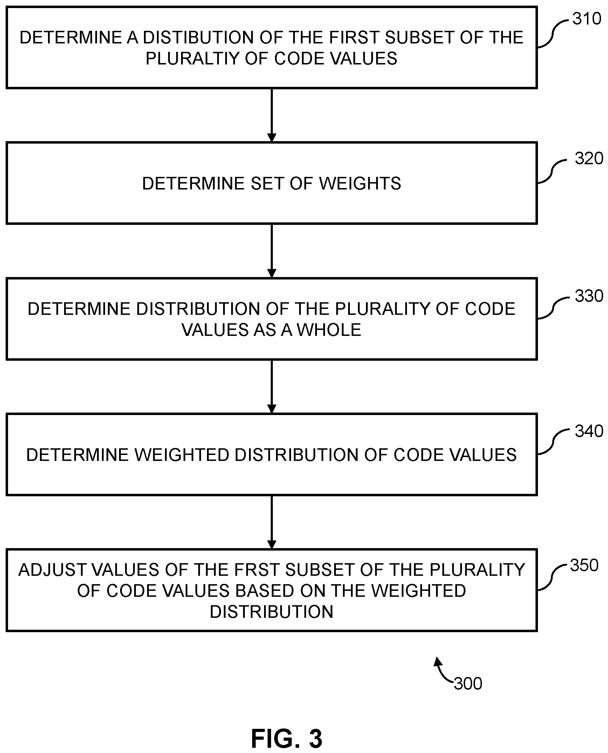

Referring now to Fig. 3 there is depicted a simplified flow diagram of a method 300 for adjusting the values of the first subset of the plurality of code values according to an embodiment of the proposed invention. Fig. 3 shows in more detail one possible implementation of how the first subset of the plurality of code values may be adjusted based on the distribution of the second subset of the plurality of code values.

In this exemplary embodiment, the latent space associated with the autoencoder model of the present invention is a discrete space associated with a set of quantized vectors. Each quantized vector has a corresponding index value that identifies the quantized vector within the set of quantized vectors. In this example, each of the plurality of code values comprises an index value corresponding to one of the quantized vectors of the set of quantized vectors.

The method 300 commences with step 310 comprising determining a distribution of the first subset of the plurality of code values. Once this has been determined, the method proceeds to step 320 comprising determining, based on the distribution of the first subset of the plurality of code values and the distribution of the second subset of the plurality of code values, a set of weights describing the relative occurrences of code values in the first and second subsets of the plurality of code values. In this exemplary embodiment, this more specifically comprises calculating a ratio of the occurrence of a predetermined value in the first subset of the plurality of code values to the occurrence of the predetermined value in the second subset of the plurality of code values and determining the set of weights from this ratio.

Once the set of weights have been calculated, the method proceeds to step 330 comprising determining a distribution of the plurality of code values as a whole. Step 340 then comprises adjusting the determined distribution of the plurality of code values, based on the determined set of weights, to determine a weighted distribution of code values. The weighted distribution produced by this process is weighted towards code values representing properties present in the regions of the image data associated with the second subset of the plurality of code values.

In this exemplary embodiment, the plurality of code values comprises a plurality of index values that correspond to a discrete set of quantized vectors that describe the latent space. Therefore, by comparing the occurrence of the different possible index values in the first and second subsets of the plurality of code values information can be garnered about the different properties of the different regions of the image data associated with the first and second subsets of the plurality of code values. Thus, the method 200 involves determining a first set of occurrences $o_1 = \{o_1^1, ..., o_1^K\}$ associated with the first subset of the plurality of code values, describing the number of times a given index value occurs in the first subset of the plurality of code values. In this instance the index values may be any integer between 1 and K). A second set of occurrences $o_2 = \{o_2^1, ..., o_2^K\}$ associated with the second set of the plurality of code values is then also determined.

The set of weights is then calculated by calculating for each index K the weighting value

$$w_K = 1 - \frac{o_1^K}{o_2^K}.$$

Where $o_2^K$ is zero, the weighting value may be set directly to zero. Calculating the weighted distribution of code values then comprises multiplying this calculated set of weights $w_K$ by the determined distribution of the plurality of code values. The resulting weighted distribution will therefore be biased towards index values that have high occurrence in the second subset of the plurality of code values, but low occurrence in the first subset of the plurality of code values.

Once the weighted distribution has been determined, in step 350, the values of the first subset of the plurality of code values are adjusted based on the weighted distribution. This involves sampling code values according to the weighted distribution of code values to generate a set of altered code values to replace the first subset of the plurality of code values.

Fig. 3 shows just one possible implementation of how the values of the first subset of the plurality of code values may be adjusted based on the distribution of the second subset of the plurality of code values and alternative methods may be used in alternative embodiments. For example, the latent space associated with the autoencoder model may be a continuous rather than a discrete space. In this instance a weighting function in latent space may be calculated rather than the discrete set of weights described above.

Various extensions of the method for calculating the sets of weights presented in Fig. 3 are also envisioned. This includes embodiments in which the weights are calculated based on only a portion of the plurality of code values. For example, the portions of the second subset of the plurality of code values that are similar to the first subset of code values (i.e. have a similar set of occurrence values) may be discarded before the set of weights are calculated. In another embodiment a segmentation model may be used to identify patterns of nevi on the skin, and the portions of the plurality of code values associated with these identified patterns discarded before the set of weights is calculated. The patterns of nevi may have similar properties and features to the skin feature that is being masked and hence their inclusion in the determination of the set of weights may result in the altered image still depicting a skin feature.

A simple alternative implementation to that shown in Fig. 3 may involve determining only the distribution of the second subset of the plurality of code values and sampling altered code values according to this distribution. Some implementations may involve the use of autoregressive models to learn conditional probability distributions associated with the representations of the image data in latent space.

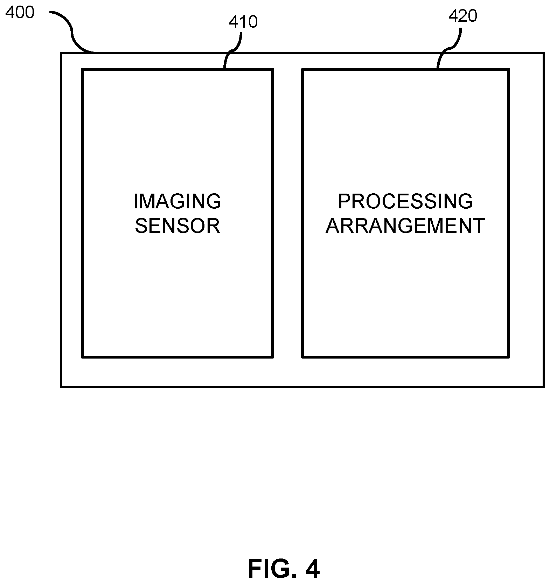

Referring now to Fig. 4 there is depicted a simplified diagram of a system 400 for processing image data.

The system comprises an image sensor 410 configured to obtain image data of the skin of the subject. This may be obtained for example during an examination that takes several individual images of the subject's skin for the purposes of the research and development of a particular personal care device.

The system further comprises a processing arrangement 420. The processing arrangement is configured to receive the image data of the skin of the subject from the image sensor 410 and process it. In detail, the processing arrangement 420 is configured to: identify a target region of the image data that depicts a skin feature of the subject; process the image data with an autoencoder model to generate a code comprising a plurality of code values representing the image data in a latent space; identify a first subset of the plurality of code values that correspond to the target region of the image data and a second subset of the plurality of code values that do not correspond to the target region of the image data; determine a distribution of the second subset of the plurality of code values; adjust the values of the first subset of the plurality of code values, based on the determined distribution of the second subset of the plurality of code values, to generate a plurality of altered code values; and alter the target region of the image data based on the plurality of altered code values.

Thus, the proposed invention may be integrated into known CT imaging systems.

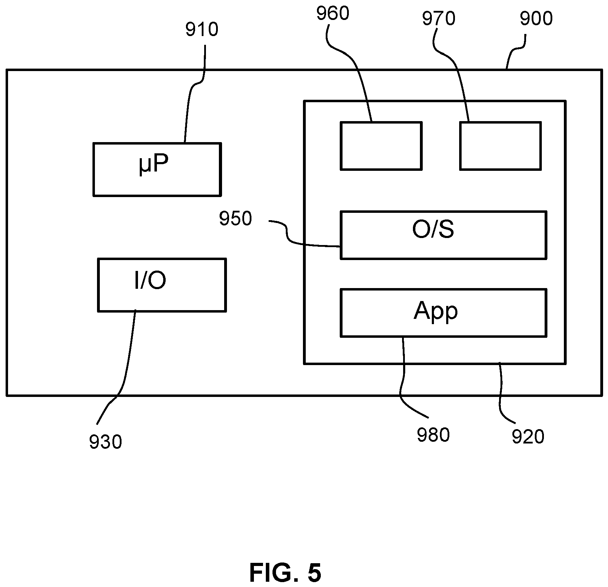

Fig. 5 illustrates an example of a computer 900 within which one or more parts of an embodiment may be employed. Various operations discussed above may utilize the capabilities of the computer 900. In this regard, it is to be understood that system functional blocks can run on a single computer or may be distributed over several computers and locations (e.g., connected via the internet).

The computer 900 includes, but is not limited to, PCs, workstations, laptops, PDAs, palm devices, servers, storages and the like. Generally, in terms of hardware architecture, the computer 900 may include one or more processors 910, memory 920 and one or more I/O device 930 that re communicatively coupled via a local interface (not shown). The local interface may have additional elements such as controllers, buffers (caches), drivers, repeaters, and receivers, to enable communications. Further, the local interface may include address, control and/or data connections to enable appropriate communications among the aforementioned components.

The processor 910 is a hardware device for executing software that can be stored in the memory 920. The processor 910 can be virtually any custom made or commercially available processor, a central processing unit (CPU), a digital signal processor (DSP), or an auxiliary processor among several processors associated with the computer 900, and the processor 910 may be a semiconductor-based microprocessor (in the form of a microchip) or a microprocessor).

The memory 920 can include any one or combination of volatile memory elements (e.g., random access memory (RAM), such as dynamic random access memory (DRAM), static random access memory (SRAM, etc.) and non-volatile memory elements (e.g., ROM, erasable programmable read only memory (EPROM), electronically erasable programmable read only memory (EEPROM), programmable read only memory (PROM), tape compact disc read only memory (CD-ROM), disk, diskette, cartridge, cassette or the like, etc.) Moreover, the memory 920 may incorporate electronic magnetic, optical and/or other types of storage media. Note that the memory 920 can have a distributed architecture, where various components are situated remote from one another, but can be accessed by the processor 910.

The software in the memory 920 may include one or more separate programs, each of which comprises an ordered list of executable instructions for implementing logical functions. The software in the memory 920 includes a suitable operating system (O/S) 90, compiler 960, source code 970, and one or more applications 980 in accordance with exemplary embodiments. As illustrated the application 980 comprises numerous functional components for implementing the features and operations of the exemplary embodiments. The application 980 of the computer 900 may represent various applications, computational units, logic, functional units, processes, operations, virtual entities, and/or modules in accordance with exemplary embodiments, but application 980 is not meant to be a limitation.

The operating system 950 controls the execution of other computer programs, and provides scheduling, input-output control, file and data management, memory management, and communication control and related services. It is contemplated by the inventors that the application 980 for implementing exemplary embodiments, may be applicable on all commercially available operating systems.

Application 980 may be a source program, executable program (object code), script, or any other entity comprising a set of instructions to be performed. When a source program, then the program is usually translated via a compiler (such as the compiler 960), assembler, interpreter, or the like, which may or may not be included within the memory 920, so as to operate properly in connection with the O/S 950. Furthermore, the application 980 can be written as an object orientated programming language, which has classes of data and methods, or a procedure programming language, which has routines, subroutines, and/or functions, for example but not limited to C, C++, C#, Pascal, Python, BASIC, APO calls, HTML, XHTML, XML, ASP scripts, JavaScript, FORTRAN, COBOL, Perl, Java, ADA, .NET, and the like.

The I/O devices 930 may include input devices such as, for example but not limited to, a mouse keyboard, scanner, microphone, camera, etc. Furthermore, The I/O devices 930 may also include output devices, for example but not limited to a printer, display, etc. Finally, the I/O devices 930 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 930 also include components for communicating over various networks such as the Internet or intranet.

If the computer 900 is a PC, workstation, intelligent device or the like, the software in the memory 920 may further include a basic input output system (BIOS) (omitted for simplicity). The BIOS is a set of essential software routines that initialize and test hardware at startup, start the O/S 950, and support the transfer of data among the hardware devices. The BIOS is stored in some type of read-only-memory, such as ROM, PROM, EPROM, EEPROM or the like, so that the BIOS can be executed when the computer 900 is activated.

When the computer 900 is in operation, the processor 910 is configured to execute software stored within the memory 920, to communicate data to and from the memory 920, and to generally control operations of the computer 900 pursuant to the software. The application 980 and the O/S 950 are read in whole or in part, by the processor 910, perhaps buffered within the processor 910, and then executed.

When the application 980 is implemented in software it should be noted that the application 980 can be stored on virtually any computer readable medium for use by or in connection with any computer related system or method. In the context of this document, a computer readable medium may be any electronic, magnetic, optical, or other physical device or means that can contain or store a computer program for use by or in connection with a computer related system or method.

The application 980 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1 and 2, and the system of Fig. 4 may be implemented in hardware or software, or a mixture of both (for example, as firmware running on hardware). To the extent that an embodiment is implemented partly or wholly in software, the functional steps illustrated in the process flow diagrams may be performed by suitably programmed physical computing devices, such as one or more central processing units (CPUs) or graphics processing units (GPUs). Each process - and its individual component steps as illustrate in the flow diagrams - may be performed by the same or different computing devices. According to embodiments, a computer-readable storage medium stores a computer program comprising computer program code configured to cause one or more physical computing devices to carry out a method as described above when the program is run on the one or more physical computing devices.

Storage media may include volatile and non-volatile computer memory (such as RAM, PROM, EPROM and EEPROM), optical discs (like CD, DVD, BD), and magnetic storage media (like hard discs and tapes). Various storage media may be fixed within a computing device or may be transportable, such that one or more programs stored thereon can be loaded into a processor.

To the extent that an embodiment is implemented partly or wholly in hardware, the blocks shown in the block diagrams of Figs. 3 and 4 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation.

Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiment can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid state medium supplied together with or as part of other hardware, but may also be distributed in other forms, such as via the Internet or other wired or wireless telecommunication systems. If the term "adapted to" is used in the claims or description it is noted the term "adapted to" is intended to be equivalent to the term "configured to". Any reference signs in the claims should not be construed as limiting the scope.

The flow diagrams and block diagrams in the Figures illustrate the architecture, functionality, and operation of possible implementations of systems, methods, and computer, program products according to various embodiments of the present invention. In this regard, each block in the flow diagrams or block diagrams may represent a module, segment, or portion of instructions, which comprise one or more executable instructions for implementing the specified logical function(s). In some alternative implementations, the functions noted in the block may occur out of the order notes in the figures. For example, two blocks shown in succession may, in fact, be executed substantially concurrently, or the blocks may sometimes be executed in reverse order, depending upon the functionality involved. It will also be noted that each block of the block diagrams and/or flow diagrams, and combinations of blocks in the block diagrams and/or flow diagrams, can be implemented by special purpose hardware-based systems that perform the specified functions or acts or carry out combinations of special purpose hardware and computer instructions.

**Claims**

1. A computer-implemented method (100) for processing image data of skin of a subject, the method comprising:

identifying (110) a target region of the image data that depicts a skin feature of the subject;
processing (120) the image data with an autoencoder model to generate a plurality of code values representing the image data in a latent space;
identifying (130) a first subset of the plurality of code values that correspond to the target region of the image data and a second subset of the plurality of code values that do not correspond to the target region of the image data;
determining (140) a distribution of the second subset of the plurality of code values;
adjusting (150) the values of the first subset of the plurality of code values, based on the determined distribution of the second subset of the plurality of code values, to generate a plurality of altered code values; and
altering (160) the target region of the image data based on the plurality of altered code values.

2. The method of claim 1, wherein adjusting the values of the first subset of the plurality of code values comprises:

determining (210) a distribution of the first subset of the plurality of code values;
determining (220), based on the distribution of the first subset of the plurality of code values and the distribution of the second subset of the plurality of code values, a set of weights describing the relative occurrences of code values in the first and second subsets of the plurality of code values;
determining (230) a distribution of the plurality of code values as a whole;
adjusting (240) the determined distribution of the plurality of code values, based on the determined set of weights, to determine a weighted distribution of code values; and
adjusting (250) the values of the first subset of the plurality of code values based on the weighted distribution.

3. The method of claim 2, wherein determining the set of weights comprises calculating a ratio of the occurrence of a predetermined value in the first subset of the plurality of code values to the occurrence of the predetermined value in the second subset of the plurality of code values.

4. The method of any preceding claim wherein the skin feature of the subject is at least one of:

a birthmark;
a tattoo;

a skin lesion; and
a collection of skin features.

5. The method of any preceding claim, wherein identifying the target region of the image data comprises processing the image data with a feature detection model.

6. The method of any preceding claim, wherein the latent space is associated with set of quantized vectors each of quantized vectors having a corresponding index, and
wherein each of the plurality of code values comprises an index value corresponding to one of the quantized vectors of the set of quantized vectors.

7. The method of any preceding claim, wherein the autoencoder model is a variational autoencoder model with at least two layers.

8. The method of any preceding claim, wherein identifying the first subset of the plurality of code values comprises transforming the target region into latent space.

9. The method of any preceding claim, wherein the distribution of the second subset of code values comprises a conditional distribution describing, for each code value of the second subset of the plurality of code values, the probability the code value has a certain predetermined value given the value of at least one other code value of the second subset of the plurality of code values.

10. The method of any preceding claim, wherein adjusting the values of the first subset of the plurality of code values comprises sampling the distribution of the second subset of the plurality of code values according to a multinomial distribution.

11. The method of any preceding claim, wherein the image data comprises a plurality of images, and wherein the first subset of code values corresponds to a first image of the plurality of images and the second subset of code values corresponds to a second, different, image of the plurality of images.

12. A computer program comprising computer program code means adapted, when said computer program is run on a computer, to implement the method of any of claims 1-11.

13. A processing arrangement (420) configured to:

identify a target region of the image data that depicts a skin feature of the subject;
process the image data with an autoencoder model to generate a plurality of code values representing the image data in a latent space;
identify a first subset of the plurality of code values that correspond to the target region of the image data and a second subset of the plurality of code values that do not correspond to the target region of the image data;
determine a distribution of the second subset of the plurality of code values;
adjust the values of the first subset of the plurality of code values, based on the determined distribution of the second subset of the plurality of code values, to generate a plurality of altered code values; and
alter the target region of the image data based on the plurality of altered code values.

14. A system (400) for processing image data of skin of a subject:

an image sensor (410) configured to obtain image data of the skin of the subject; and
the processing arrangement (420) of claim 13.

IDENTIFY TARGET REGION OF IMAGE DATA — 110

PROCESS IMAGE DATA WITH AUTOENCODER MODEL TO GENERATE PLURALITY OF CODE VALUES — 120

IDENTIFY FIRST AND SECOND SUBSETS OF THE PLURALITY OF CODE VLAUES — 130

DETERMINE DISTRIBUTION FO THE SECOND SUBSET OF THE PLURALITY OF CODE VALUES — 140

ADJUST THE VALUES OF THE FRIST SUBSET OF THE PLURALITY OF CODE VALUES — 150

ALTER TARGET REGION OF IMAGE DATA BASED ON THE PLURALITY OF ALTERED CODE VALUES — 160

100

# FIG. 1

**FIG. 2**

```
┌─────────────────────────────────────────────────┐
│  DETERMINE A DISTIBUTION OF THE FIRST SUBSET OF THE │─ 310
│         PLURALTIY OF CODE VALUES                 │
└─────────────────────────────────────────────────┘
                        │
                        ▼
┌─────────────────────────────────────────────────┐
│           DETERMINE SET OF WEIGHTS               │─ 320
└─────────────────────────────────────────────────┘
                        │
                        ▼
┌─────────────────────────────────────────────────┐
│  DETERMINE DISTRIBUTION OF THE PLURALITY OF CODE  │─ 330
│              VALUES AS A WHOLE                    │
└─────────────────────────────────────────────────┘
                        │
                        ▼
┌─────────────────────────────────────────────────┐
│   DETERMINE WEIGHTED DISTRIBUTION OF CODE VALUES  │─ 340
└─────────────────────────────────────────────────┘
                        │
                        ▼
┌─────────────────────────────────────────────────┐
│  ADJUST VALUES OF THE FRST SUBSET OF THE PLURALITY │─ 350
│    OF CODE VALUES BASED ON THE WEIGHTED           │
│                 DISTRIBUTION                      │
└─────────────────────────────────────────────────┘
                                                ╲
                                                 300
```

**FIG. 3**

400

410

420

IMAGING
SENSOR

PROCESSING
ARRANGEMENT

**FIG. 4**

**FIG. 5**

Europäisches Patentamt
European Patent Office
Office européen des brevets

# EUROPEAN SEARCH REPORT

**Application Number**

EP 24 18 4863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/103190 A1 (MONSTERS ALIENS ROBOTS ZOMBIES INC [CA]) 23 May 2024 (2024-05-23) * paragraphs [0014], [0023], [0031], [0151], [0157], [0167], [0169], [0332] * | 1-14 | INV. G06T5/60 ADD. G06T11/00 |
| X | JINGXUAN WEI ET AL: "DialogPaint: A Dialog-based Image Editing Model", ARXIV.ORG, CORNELL UNIVERSITY LIBRARY, 201 OLIN LIBRARY CORNELL UNIVERSITY ITHACA, NY 14853, 18 October 2023 (2023-10-18), XP091637951, * section 2.2 section 4.2; figure 7 * | 1-14 | |
| X | US 2022/028139 A1 (MITRA NILOY [GB] ET AL) 27 January 2022 (2022-01-27) * paragraphs [0020] - [0059] * | 1-14 | |

| TECHNICAL FIELDS SEARCHED (IPC) |
|---|
| G06T G06N G06V |

The present search report has been drawn up for all claims

| Place of search | Date of completion of the search | Examiner |
|---|---|---|
| The Hague | 29 November 2024 | Mukasa, Oliver |

EPO FORM 1503 03.82 (P04C01)

## ANNEX TO THE EUROPEAN SEARCH REPORT
## ON EUROPEAN PATENT APPLICATION NO.

EP 24 18 4863

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2024

| Patent document cited in search report | Publication date | Patent family member(s) | Publication date |
|---|---|---|---|
| WO 2024103190 A1 | 23-05-2024 | NONE | |
| US 2022028139 A1 | 27-01-2022 | NONE | |

EPO FORM P0459

For more details about this annex : see Official Journal of the European Patent Office, No. 12/82